(19) **Europäisches Patentamt**
**European Patent Office**
**Office européen des brevets**

(11) **EP 1 336 083 B1**

(12) **EUROPÄISCHE PATENTSCHRIFT**

(45) Veröffentlichungstag und Bekanntmachung des Hinweises auf die Patenterteilung:
**15.08.2007 Patentblatt 2007/33**

(21) Anmeldenummer: **01997680.2**

(22) Anmeldetag: **13.11.2001**

(51) Int Cl.:
***G01F 23/296*** (2006.01)

(86) Internationale Anmeldenummer:
**PCT/EP2001/013114**

(87) Internationale Veröffentlichungsnummer:
**WO 2002/042724 (30.05.2002 Gazette 2002/22)**

(54) **VERFAHREN UND VORRICHTUNG ZUR FESTSTELLUNG UND/ODER ÜBERWACHUNG DES FÜLLSTANDES EINES MEDIUMS IN EINEM BEHÄLTER BZW. ZUR ERMITTLUNG DER DICHTE EINES MEDIUMS IN EINEM BEHÄLTER**

METHOD AND DEVICE FOR DETERMINING AND/OR MONITORING THE LEVEL OF A MEDIUM IN A CONTAINER, OR FOR DETERMINING THE DENSITY OF A MEDIUM IN A CONTAINER

PROCEDE ET DISPOSITIF PERMETTANT DE CONSTATER ET / OU DE SURVEILLER LE NIVEAU D'UN MILIEU DANS UNE CUVE OU DE DETERMINER LA DENSITE D'UN MILIEU DANS UNE CUVE

(84) Benannte Vertragsstaaten:
**AT BE CH CY DE DK ES FI FR GB GR IE IT LI LU MC NL PT SE TR**

(30) Priorität: **22.11.2000 DE 10057974**

(43) Veröffentlichungstag der Anmeldung:
**20.08.2003 Patentblatt 2003/34**

(73) Patentinhaber: **Endress + Hauser GmbH + Co. KG**
**79689 Maulburg (DE)**

(72) Erfinder:
• **LOPATIN, Sergej**
**79540 Lörrach (DE)**

• **MÜLLER, Alexander**
**79689 Maulburg (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 355 038    US-A- 3 170 094**
**US-A- 6 044 694**

## Beschreibung

Die Erfindung bezieht sich auf ein Verfahren und eine Vorrichtung zur Feststellung und/oder Überwachung des Füllstandes eines Mediums in einem Behälter bzw. zur Ermittlung der Dichte eines Mediums in einem Behälter gemäß dem Oberbegriff der Ansprüche 1 und 10. Ein solches Verfahren und eine solche Vorrichtung sind aus dem Dokument US-A-6 044 694 bekannt.

Es sind bereits Vorrichtungen mit zumindest einem Schwingelement, sog. Vibrationsdetektoren, zur Detektion bzw. zur Überwachung des Füllstandes eines Mediums in einem Behälter bekannt geworden. Bei dem Schwing-element handelt es sich üblicherweise um zumindest einen Schwingstab, der an einer Membran befestigt ist. Die Membran wird über einen elektro-mechanischen Wandler, z. B. ein piezo-elektrisches Element, zu Schwingungen angeregt. Aufgrund der Schwingungen der Membran führt auch das an der Membran befestigte Schwingelement selbst Schwing-bewegungen aus.

Als Füllstandsmeßgeräte ausgebildete Vibrationsdetektoren nutzen den Effekt aus, daß die Schwingungsfrequenz und die Schwingungsamplitude abhängig sind von dem jeweiligen Bedeckungsgrad des Schwingelements: Während das Schwingelement in Luft frei und ungedämpft seine Schwingungen aus-führen kann, erfährt es eine Dämpfung und als Folge davon eine Frequenz- und Amplitudenänderung, sobald es teilweise oder vollständig in das Medium eintaucht. Anhand einer vorbestimmten Frequenzänderung läßt sich folglich ein eindeutiger Rückschluß auf den jeweiligen Füllstand in dem Behälter ziehen. Füllstandsmeßgeräte werden übrigens vornehmlich als Überfüll-sicherungen oder zum Zwecke des Pumpenleerlaufschutzes verwendet.

Darüber hinaus wird die Schwingfrequenz des Schwingelements auch von der jeweiligen Dichte des Mediums beeinflußt. Daher besteht bei konstantem Bedeckungsgrad eine funktionale Beziehung zur Dichte des Mediums, so daß Vibrationsdetektoren sowohl für die Füllstands- als auch für die Dichtebestimmung bestens geeignet sind. In der Praxis werden zwecks Überwachung und Erkennung des Füllstandes bzw. der Dichte des Mediums in dem Behälter die Schwingungen der Membran aufgenommen und mittels zumindest eines Piezoelements in elektrische Empfangssignale umgewandelt.

Die elektrischen Empfangssignale werden anschließend von einer Auswerte-Elektronik ausgewertet. Im Falle der Füllstandsbestimmung überwacht die Auswerte-Elektronik die Schwingfrequenz und/oder die Schwingungs-amplitude des Schwingelements und signalisiert den Zustand 'Sensor bedeckt' bzw. 'Sensor unbedeckt', sobald die Meßwerte einen vorgegebenen Referenzwert unter- oder überschreiten. Eine entsprechende Meldung an das Bedienpersonal kann auf optischem und/oder auf akustischem Weg erfolgen. Alternativ oder zusätzlich wird ein Schaltvorgang ausgelöst; so wird etwa ein Zu- oder Ablaufventil an dem Behälter geöffnet oder geschlossen.

Die zuvorgenannten Geräte zum Messen des Füllstandes oder der Dichte werden in einer Vielzahl von Industriezweigen eingesetzt, beispielsweise in der Chemie, in der Lebensmittelindustrie oder bei der Wasseraufbereitung. Die Bandbreite der überwachten Füllgüter reicht von Wasser über Yoghurt, Farben und Lacke bis hin zu hochviskosen Füllgütern, wie Honig, oder bis hin zu stark schäumenden Füllgütern, wie z.B. Bier.

Vibrationsdetektoren sind allerdings nur in erster Näherung ausschließlich von den beiden zuvor genannten Größen 'Füllstand' und 'Dichte' abhängig. Darüber hinaus beeinflussen auch weitere physikalische Größen, etwa die Prozeßgrößen Druck und Temperatur oder die Viskosität des Mediums das Schwingverhalten des Schwingelements. Sobald daher die Anforderung gestellt wird, den Sensor für hochgenaue Messungen einzusetzen oder ihn als universell einsetzbare Meßvorrichtung im Hoch- und Tieftemperaturbereich bzw. im Hoch- und Tiefdruckbereich zu verwenden, muß der Einfluß dieser Größen auf das Schwingverhalten berücksichtigt werden. Prinzipiell gilt, daß der Einfluß von Temperatur und Druck auf die Meßergebnisse um so gravierender ist, je stärker beide Größen von den Normalbedingungen abweichen. Ähnliche Überlegungen gelten auch im Hinblick auf die Viskosität des Mediums: Eine Meßvorrichtung wird in Zukunft in der Lage sein müssen, in Verbindung mit Medien unterschiedlichster Viskosität verläßliche Meßergebnisse zu liefern.

Der Erfindung liegt die Aufgabe zugrunde, ein Verfahren und eine Vorrichtung vorzuschlagen, die eine hochgenaue Bestimmung oder Überwachung des Füllstandes oder der Dichte eines Mediums erlauben.

Bezüglich des Verfahrens wird die Aufgabe dadurch gelöst, daß der Einfluß der Viskosität auf die Schwingfrequenz der schwingfähigen Einheit bei der Bestimmung des Füllstandes des Mediums in dem Behälter bzw. bei der Bestimmung der Dichte des in dem Behälter befindlichen Mediums ermittelt und entsprechend kompensiert wird. Hierdurch wird sichergestellt, daß im Falle der Füllstandsmessung die Schaltpunkte der Meßvorrichtung, die die Zustände 'Sensor bedeckt' bzw. 'Sensor unbedeckt' signalisieren, genau definiert sind. Eine Fehlfunktion der Meßvorrichtung, die dadurch zustande kommt, daß Temperatur- und/oder Druckabweichungen das Erreichen der vorgegebenen Schaltpunkte lediglich vortäuschen, wird verläßlich ausgeschlossen. Im Falle der Dichtemessung wird durch die Kompensation des Einflusses der unterschiedlichen Störgrößen auf das Schwingverhalten des Schwingelements die Fehlertoleranz erheblich verringert, so daß sich das erfindungsgemäße Verfahren und die entsprechende Vorrichtung für hochgenaue Dichtemessungen hervorragend eignen.

Gemäß einer bevorzugten Weiterbildung des erfindungsgemäßen Verfahrens ist vorgesehen, daß eine Änderung der Schwingfrequenz der schwingfähigen Einheit, die durch eine Änderung der Viskosität des Mediums hervorgerufen wird, dadurch kompensiert wird, daß die Erregerfrequenz gegenüber der Schwingfrequenz der schwingfähigen Einheit eine Phasenverschiebung aufweist, die von 90° verschieden ist.

Insbesondere ist die Phasenverschiebung zwischen der Erregerfrequenz und der Schwingfrequenz der schwingfähigen Einheit so bemessen, daß eine auftretende Änderung im Schwingverhalten im wesentlichen unabhängig ist von der Viskosität des Mediums und somit im wesentlichen nur abhängig ist von der Eintauchtiefe der schwingfähigen Einheit in das Medium bzw. von der Dichte des Mediums. In der Praxis hat sich herausgestellt, daß eine Phasenverschiebung von ca. 70° in flüssigen Medien bestens geeignet ist, den Einfluß der Viskosität auf die Meßergebnisse auszuschalten. Ist das Medium hingegen stark schäumend, so läßt sich mit Phasenverschiebung von ca. 120° zwischen Erreger- und Schwingfrequenz der Einfluß der Viskosität des Schaums hinreichend gut kompensieren. Es ist selbstverständlich, daß die zur Kompensation des Einflusses der Viskosität erforderliche Phasenverschiebung auch entscheidend von der jeweiligen Ausgestaltung der schwingfähigen Einheit abhängt.

Gemäß einer vorteilhaften Weiterbildung des erfindungsgemäßen Verfahrens ist vorgesehen, daß zumindest die Viskosität direkt gemessen oder indirekt ermittelt wird. Bevorzugt werden anhand empirisch ermittelter Daten Kennlinien erstellt und gespeichert, die die Frequenzänderung der schwingfähigen Einheit in Abhängigkeit von zumindest der Viskosität wiedergeben. Selbstverständlich ist es auch möglich, die Kennlinien anhand eines mathematischen Modells zu berechnen und abzuspeichern, wobei das mathematische Modell eventuell wieder auf empirisch ermittelte Daten zurückzuführen ist.

Eine Ausgestaltung des erfindungsgemäßen Verfahrens schlägt vor, daß weitere Parameter bei der Auswahl der korrekten Kennlinien berücksichtigt werden. Insbesondere handelt es sich bei diesen Parametern um die Geometrie und/oder die Dimensionierung der schwingfähigen Einheit, das Material, aus dem die schwingfähige Einheit gefertigt ist und/oder im Falle der Füllstandsbestimmung die Einbauposition der schwingfähigen Einheit im Behälter. Die Kennlinien werden also auch sensorspezifisch und/oder systemspezifisch zur Verfügung gestellt.

Das erfindungsgemäße Verfahren sieht vor, daß die Viskosität gemessen oder ermittelt wird und sieht vor, daß die entsprechende Frequenzänderung im Falle der Füllstandsmessung bei der Festlegung des Schaltpunktes bzw. im Falle der Dichtemessung bei der Bestimmung der Dichte des Mediums berücksichtigt wird. Durch diese Ausgestaltung ist es möglich, unverzüglich auf Schwankungen in der Viskosität zu reagieren und die Meßvorrichtung somit universell - also unabhängig von den am Meßort herrschenden Bedingungen - einzusetzen.

Bezüglich der Vorrichtung wird die Aufgabe dadurch gelöst, daß die Regel-/Auswerteeinheit den Einfluß der Viskosität auf die Schwing-frequenz der schwingfähigen Einheit ermittelt und daß die Regel-/Auswerte-einheit die Frequenzänderung, bei der das Erreichen des vorbestimmten Füllstandes angezeigt wird, derart korrigiert, daß der Einfluß dieser Störgröße eliminiert wird, bzw. daß die Regel-/Auswerteeinheit den durch die Störgröße auftretenden Meßfehler bei der Dichtebestimmung berücksichtigt.

Wie bereits an vorhergehender Stelle angedeutet, handelt es sich bei der Störgröße um die Viskosität des Mediums. Selbstverständlich läßt sich zusätzlich jede andere, empirisch greifbare Störgröße wie die temperatur oder der Druck, die Einfluß auf das Schwingverhalten des Schwingelements nimmt, mittels der Erfindung kompensieren.

Um stets die aktuellen Werte der Temperatur und/oder des Druckes zur Verfügung zu haben, sind/ist ein Temperatursensor und/oder ein Drucksensor vorgesehen, die/der die Temperatur bzw. den Druck in der Umgebung der schwingfähigen Einheit bestimmen/bestimmt. Gemäß einer Ausgestaltung der erfindungsgemäßen Vorrichtung sind/ist der Temperatursensor, z. B. ein PT 100, und/oder der Drucksensor in die Vorrichtung zur Bestimmung des Füllstandes bzw. der Dichte integriert sind. Selbstverständlich ist es auch möglich, den Temperatur- und/oder Drucksensor als separate Einheiten vorzusehen und im Behälter zu positionieren. Weiterhin ist es möglich, beispielsweise den Druck oder die Temperatur über die schwingfähige Einheit selbst zu ermitteln. Insbesondere wird hier die Steifigkeit zwischen der Antriebs-/Empfangseinheit und der Membran gemessen, an der z. B. Schwingstäbe in Form einer Stimmgabel befestigt sind. Zwecks Messung der Steifigkeit wird die schwingfähige Einheit mit einem hochfrequenten Schwingungsmode beaufschlagt. Anschließend wird die Reaktion der schwingfähigen Einheit auf die Erregerfrequenz zwecks Bestimmung der Temperatur oder des Druckes ausgewertet.

Gemäß einer bevorzugten Weiterbildung der erfindungsgemäßen Vorrichtung wird vorgeschlagen, daß eine Datenübertragungsstrecke bzw. ein Datenbus, vorgesehen ist. Über diese Verbindungen leiten die Sensoren und die einzelnen Einheiten der erfindungsgemäßen Vorrichtung ihre Daten an die Regel-/Auswerteeinheit weiter, bzw. über die Verbindungen kommunizieren die Sensoren und/oder die einzelnen Einheiten der erfindungsgemäßen Vorrichtung mit der Regel-/Auswerteeinheit. Bei der Kommunikation wird bevorzugt auf die gängigen Industriestandards zurückgegriffen. Als Beispiele sind hier PROFIBUS PA, FIELDBUS FOUNDATION oder HART zu nennen.

Die Erfindung wird anhand der nachfolgenden Zeichnungen näher erläutert. Es zeigt:

Fig. 1: eine schematische Darstellung einer bevorzugten Ausgestaltung der erfindungsgemäßen Vorrichtung,

Fig. 2: ein Flußdiagramm zur Ansteuerung der Regel-/Auswerteeinheit im Falle der Füllstandsbestimmung,

Fig. 3: ein Flußdiagramm zur Ansteuerung der Regel-/Auswerteeinheit im Falle der Dichtebestimmung,

Fig. 4: eine graphische Darstellung der Kennlinien E(Δf) bei unterschiedlichen Viskositäten und

Fig. 5: eine schematische Darstellung einer Schaltung zur Kompensation von Frequenzänderungen, die infolge der Viskosität des Mediums auftreten.

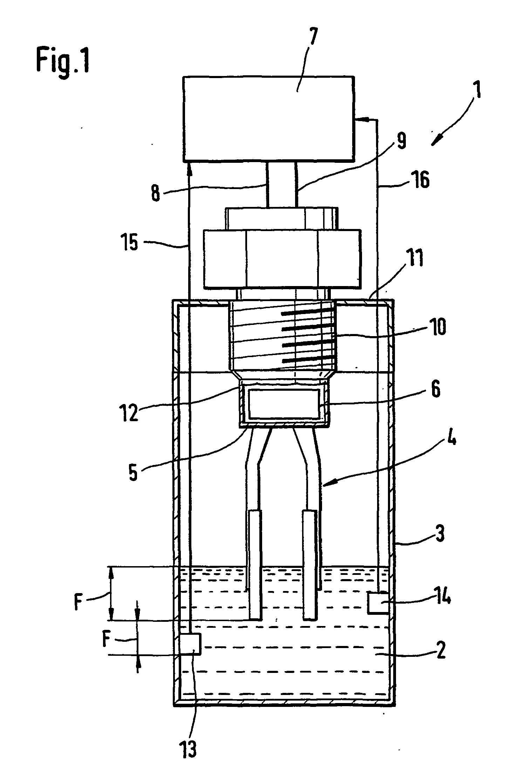

Fig. 1 zeigt eine schematische Darstellung der erfindungsgemäßen Vorrichtung zur Feststellung und/oder Überwachung des Füllstandes F des Mediums 2 in dem Behälter 3. Kurz gesprochen, handelt es sich um einen Grenzwertdetektor. Die in der Fig. 1 gezeigte Vorrichtung 1 ist selbst-verständlich auch-wie bereits an vorhergehender Stelle erläutert - zur Bestimmung der Dichte des in dem Behälter 3 befindlichen Mediums 2 geeignet. Während im Fall der Füllstandsbestimmung die schwingfähige Einheit nur bei Erreichen des detektierten Grenzfüllstandes in das Medium bzw. nicht in das Medium eintaucht, muß sie zwecks Überwachung bzw. Bestimmung der Dichte ρ kontinuierlich bis zu einer vorbestimmten Eintauchtiefe E mit dem Medium 2 in Kontakt sein. Bei dem Behälter 3 kann es sich natürlich auch um ein Rohr handeln, das von dem Medium 2 durchflossen wird.

Die Vorrichtung 1 weist ein im wesentlichen zylindrisches Gehäuse 12 auf. An der Mantelfläche des Gehäuses 12 ist ein Gewinde 10 vorgesehen. Das Gewinde 10 dient zur Befestigung der Vorrichtung 1 auf der Höhe des vorbestimmten Füllstandes F in dem Behälter 3 und ist im gezeigten Fall in einer entsprechenden Öffnung im Deckel 11 des Behälters 3 angeordnet. Andere Arten der Befestigung, z.B. mittels eines Flansches, können die in Fig. 1 dargestellte Anbringung der erfindungsgemäßen Vorrichtung 1 an dem Behälter 3 ohne weiteres ersetzen.

Das Gehäuse 12 ist an seinem in den Behälter 3 hineinragenden Endbereich von der Membran 5 abgeschlossen, wobei die Membran 5 in ihrem Randbereich in das Gehäuse 12 eingespannt ist. An der Membran 5 ist die in den Behälter 3 ragende schwingungsfähige Einheit 4 befestigt. Im dargestellten Fall hat die schwingfähige Einheit 4 die Ausgestaltung einer Stimmgabel, umfaßt also zwei voneinander beabstandete, auf der Membran 5 befestigte und in den Behälter 3 hineinragende ragende Schwingstäbe.

Die Membran 5 wird von einem Antriebs-/Empfangselement 6 in Schwingungen versetzt, wobei das Antriebselement 6a die Membran 5 mit einer vorgegebenen Erregerfrequenz zu Schwingungen anregt. Bei dem Antriebselement 6a handelt es sich z. B. um einen Stapelantrieb oder um einen Bimorphantrieb. Beide Arten von piezo-elektrischen Antrieben sind aus dem Stand der Technik hinreichend bekannt, so daß an dieser Stelle auf ihre Beschreibung verzichtet werden kann. Aufgrund der Schwingungen der Membran 5 führt auch die schwingfähige Einheit 4 Schwingungen aus, wobei die Schwingfrequenz unterschiedlich ist, wenn die schwingfähige Einheit 4 mit dem Medium 2 in Kontakt ist und so beim Schwingen die Masse des Mediums 2 mitbewegen muß oder wenn die schwingfähige Einheit 4 frei und ohne Kontakt mit dem Medium 2 schwingen kann.

Bei der Empfangseinheit 6b kann es sich beispielsweise ebenso wie bei der Antriebseinheit 6a um ein einziges piezo-elektrisches Element handeln. Die Antriebs-/Empfangseinheit 6 regt die Membran 5 zu Schwingungen in Abhängigkeit von einem an dem piezo-elektrischen Element anliegenden Sendesignal an, und sie dient zum Empfangen und Umwandeln der Schwingungen der Membran 5 in ein elektrisches Empfangssignal.

Piezo-elektrischen Elemente ändern ihre Grössen (Dicke, Durchmesser ...) in Abhängigkeit von einer in Polarisationsrichtung anliegenden Spannungsdifferenz. Liegt eine Wechselspannung an, so oszilliert die Dicke: Nimmt die Dicke zu, so nimmt der Durchmesser des piezo-elektrischen Elementes ab; nimmt andererseits die Dicke ab, so vergrößert sich der Durchmesser des piezo-elektrischen Elements entsprechend.

Aufgrund dieses Schwingungsverhaltens des piezo-elektrischen Elements bewirkt die Spannungsdifferenz ein Durchbiegen der in das Gehäuse 12 eingespannten Membran 5. Die auf der Membran 5 angeordneten Schwing-stäbe des schwingfähigen Einheit 4 führen aufgrund der Schwingungen der Membran 5 gegensinnige Schwingungen um ihre Längsachse aus. Die gegensinnigen Schwingungen haben den Vorteil, daß sich die von jedem Schwingstab auf die Membran 5 ausgeübten Wechselkräfte gegenseitig aufheben. Hierdurch wird die mechanische Beanspruchung der Einspannung minimiert, so daß näherungsweise keine Schwingungsenergie auf das Gehäuse 12 übertragen wird.

In dem Behälter ist desweiteren ein Temperatursensor 13 und ein Druck-sensor 14 vorgesehen. Beide Sensoren 13, 14 und der Vibrationssensor liefern ihre Meßwerte zwecks Auswertung an die Regel-/Auswerteeinheit 7.

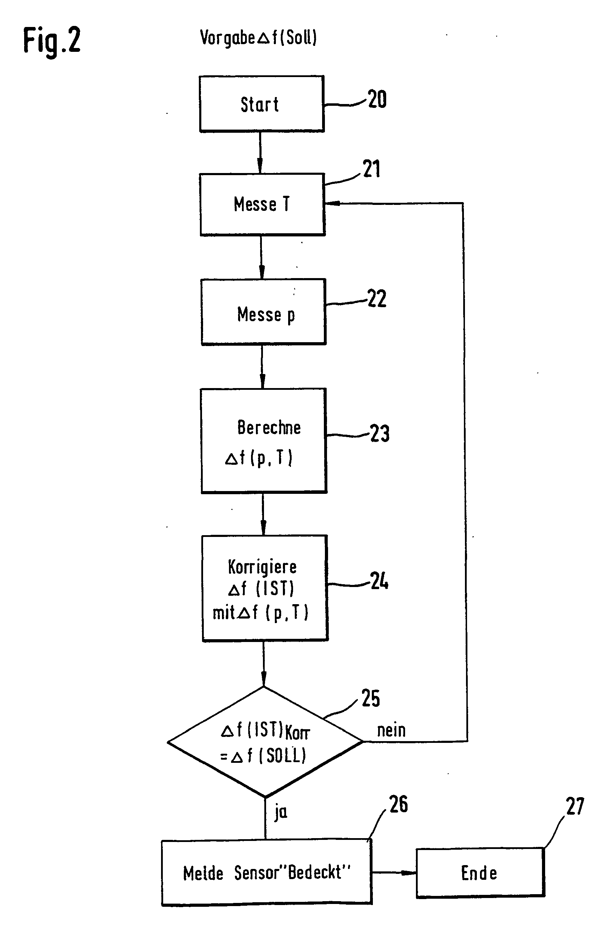

In Fig. 2 ist ein Flußdiagramm zur Ansteuerung der Regel-/Auswerteeinheit 7 für den Fall der Füllstandsbestimmung dargestellt. Als Sollwert zur Charakterisierung des Schaltpunktes wird die zugehörige unter Standard-bedingungen ermittelte Frequenzänderung vorgegeben. Nach dem Programmstart bei Punkt 20 werden bei den Programmpunkten 21, 22 der aktuelle Temperaturwert T und der aktuelle Druckwert p bereitgestellt. Anhand der gemessenen Werte T, p wird unter Programmpunkt 23 die entsprechende Frequenzänderung Δf (p, T) berechnet. Die Berechnung kann beispielsweise unter Verwendung einer empirisch ermittelten Kennlinie erfolgen. Diese Kennlinie kann durch fol-gende Formel beschrieben werden:

$$\Delta f\,(p,\,T) = p \bullet (a \bullet T + b \bullet T^2 + c) + d \bullet T + e.$$

Hierbei sind a, b, c, d, e reelle Zahlen, in denen sich sensor- und systemabhängige Größen widerspiegeln. Die Ermittlung dieser Größen erfolgt beispielsweise unter Verwendung empirisch ermittelter Kennlinien. Für unterschiedliche Sensoren oder Einbauarten eines Füllstands- oder Dichte-Meßgerätes in den Behälter sind gemäß einer bevorzugten Variante der erfindungsgemäßen Vorrichtung unterschiedliche Sätze von Kennlinien vorgesehen. Im einfachsten Fall werden diese Kennliniensätze von dem Bedienpersonal über Knopfdruck für die korrekte Ermittlung des Schalt-punktes oder der Dichte aufgerufen, so daß sie nachfolgend der Regel-/ Auswerteeinheit zur Verfügung gestellt werden.

Es versteht sich von selbst, daß ein interessanter Aspekt der Erfindung auch derjenige ist, daß diese unterschiedlichen Kennliniensätze, die empirisch ermittelt oder nach einem mathematischen Modell berechnet wurden und die sensor- und/oder systemspezifisch sind, auch völlig unabhängig von der zuvor beschriebenen Temperatur-, Druck- und/oder Viskositätskompensation angewendet werden können.

Die unter dem Einfluß der Störgrößen (Druck p, Temperatur T) auftretende Frequenzänderung $\Delta f\,(p,\,T)$ wird nachfolgend unter Programmpunkt 25 bei der den Füllstand F bzw. die Dichte $\rho$ widerspiegelnden Frequenzänderung $\Delta f$ (IST) berücksichtigt. Erst wenn der korrigierte Istwert $\Delta f$ (IST)Korr mit dem vorgegebenen Sollwert $\Delta f$ (SOLL) der Frequenzänderung übereinstimmt, wird bei Punkt 26 eine Meldung 'Sensor bedeckt' ausgegeben. Solange die zuvor genannte Bedingung nicht erfüllt ist, werden die Programmpunkte 21 bis 25 in einer Schleife durchlaufen. Ist die unter 26 vorgesehene Meldung erfolgt, wird das Programm bei 27 beendet.

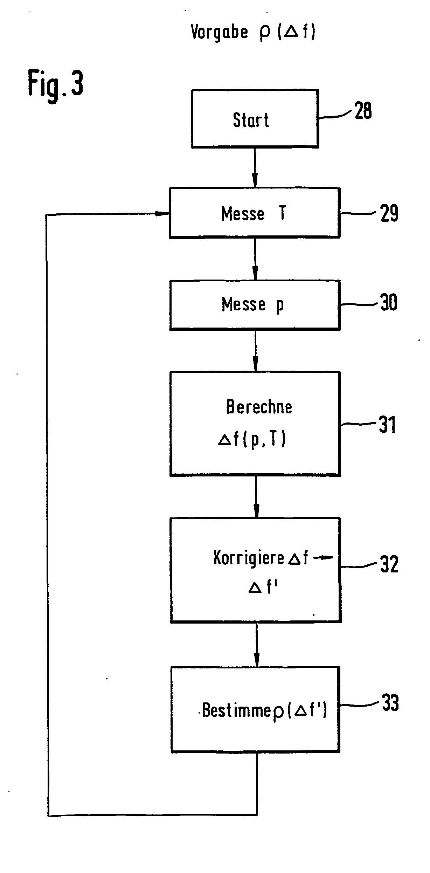

In Fig. 3 ist ein Flußdiagramm zur Ansteuerung der Regel-/Auswerteeinheit 7 für den Fall der Dichtebestimmung dargestellt. Als Sollwerte für die Dichte $\rho(\Delta f)$ wird die unter entsprechenden Standardbedingungen ermittelte Kennlinie vorgegeben, die die Dichte $\rho$ in Abhängigkeit von der Frequenz-änderung $\Delta f$ wiedergibt. In Kenntnis der Werte von Temperatur T und Druck p, die unter den Programmpunkten 29, 30 gemessen werden, wird bei 31 die zugehörige Frequenzänderung $\Delta f(p,\,T)$ berechnet oder in sonstiger Weise ermittelt. Diese Frequenzänderung $\Delta f(p,\,T)$ wird bei der Bestimmung der tatsächlichen, von diesen Störgrößen p, T unbeeinflußten Frequenzänderung $\Delta f'$ berücksichtigt (Punkt 32), so daß die korrigierte Frequenzänderung $\Delta f'$ verläßlich die tatsächliche Dichte $\rho(\Delta f')$ des Mediums 2 widerspiegelt (Programmpunkt 33).

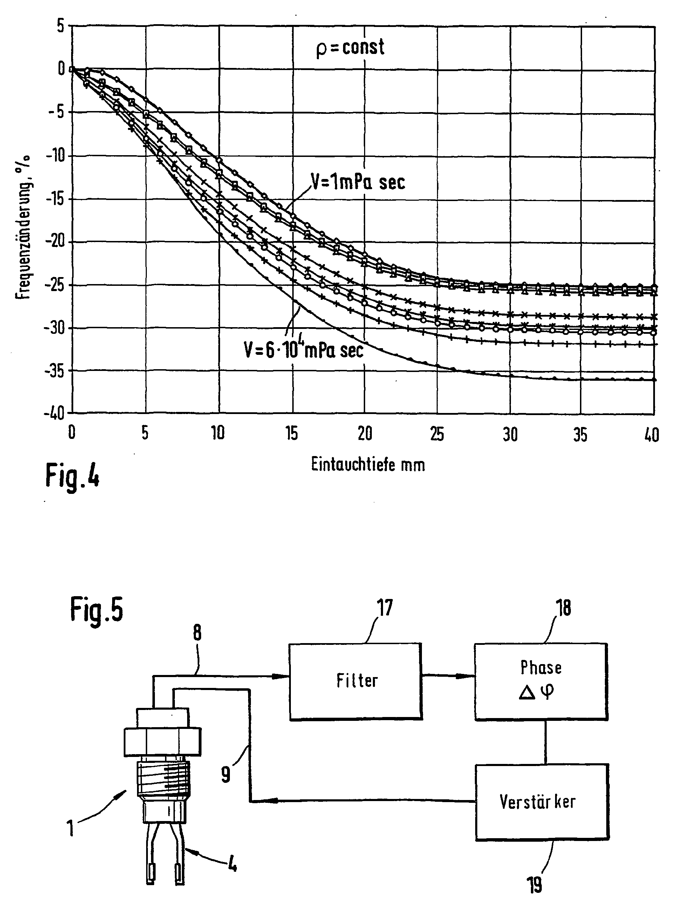

Fig. 4 zeigt in einer graphischen Darstellung die Eintauchtiefe E in Abhängigkeit von der Frequenzänderung $\Delta f$ bei unterschiedlichen Viskositäten V. Die beiden Extremfälle einer Viskosität von 1 mPasec und 60.000 mPasec sind in Fig. 4 entsprechend markiert. Wie deutlich zu sehen ist, ist die Frequenzänderung $\Delta f$ nicht nur von der Eintauchtiefe E der schwingfähigen Einheit 4 in das Medium 2 abhängig, sondern sie wird auch gravierend von der Viskosität V des Meßmediums 2 beeinflußt. Erinnert sei an dieser Stelle daran, daß sich die Erfindung auf eine universell für die Füllstands- oder Dichtemessung bei unterschiedlichsten Medien 2 verwendbaren Vorrichtung beziehen soll. Würde die unterschiedliche Viskositäten V der Medien 2 nicht erfindungsgemäß berücksichtigt, würde z. B. ein Schaltvorgang ausgelöst, obwohl der vorgegebene Füllstand noch überhaupt nicht erreicht worden ist. Ebenso wären die Meßfehler, was die Dichtemessung betrifft, inakzeptabel groß.

Fig. 5 zeigt eine schematische Darstellung einer Schaltung zur Kompensation einer Frequenzänderung $\Delta f$, die - wie in Fig. 4 klar zu sehen ist - infolge des Einflusses der Viskosität V des zu messenden oder überwachenden Mediums 2 auftritt. Kurz gesagt, wird durch die gezeigte Schaltung die Störgröße 'Viskosität V' automatisch kompensiert. Wie bereits an vorhergehender Stelle beschrieben, wird hierzu die Phasenverschiebung $\Delta \varphi$ zwischen der Erregerfrequenz $f_E$ und der Schwingfrequenz $f_s$ der schwingfähigen Einheit 4 so bemessen, daß eine auftretende Frequenzänderung $\Delta f$ im wesentlichen unabhängig ist von der Viskosität V des Mediums 2 und somit im wesentlichen nur abhängig ist von der Eintauchtiefe E der schwingfähigen Einheit 4 in das Medium 2 bzw. von der Dichte $\rho$ des Mediums 2.

Insbesondere wird das die Schwingung der schwingfähigen Einheit widerspiegelnde Empfangssignal der Empfangseinheit über das Filter 17 gefiltert; anschließend wird das gefilterte Signal einer Phasenverschiebung $\Delta \varphi$ unterzogen, die derart bemessen ist, daß die durch die Viskosität V verursachte Frequenzänderung $\Delta f$ (V) keinen Einfluß mehr auf die Frequenzänderung $\Delta f$ der Schwingfrequenz der schwingfähigen Einheit 4 hat. Liegen die Temperatur- und/oder Druckwerte innerhalb eines Bereichs, in dem sie keine meßbaren Auswirkungen auf die Frequenzänderung $\Delta f$ der schwingfähigen Einheit 4 haben, so läßt sich der Einfluß der Viskosität V problemlos kompensieren. Liegen die Temperatur- und/oder Druckwerte hingegen in einem Bereich, in dem sie die Frequenzänderung $\Delta f$ so stark beeinflussen, daß Meßfehler und Fehlfunktionen des Sensors auftreten, so wird zusätzlich die zuvor beschriebenen Kompensation des Temperatur- und/oder Druckeinflusses erforderlich sein.

Es hat sich gezeigt, daß bei einer großen Zahl von Flüssigkeiten unterschiedlicher Viskosität V mit einer Phasenverschiebung von 70° der Einfluß der Viskosität hinreichend gut kompensiert werden kann. Bei dichten Schäumen (Dichte > 0,6 g/cm$^3$) ist eine Phasenverschiebung von 120° - 140° bestens zur Kompensation geeignet.

Hat man alle durch Temperatur T, Druck p und/oder Dichte $\rho$ bedingte Frequenzänderungen $\Delta f\,(p,\,T,\,\rho)$ im Griff, so ist umgekehrt eine Bestimmung der Viskosität V möglich.

**Bezugszeichenliste**

1 erfindungsgemäße Vorrichtung
2 Medium
3 Behälter
4 Schwingfähige Einheit, insbesondere Stimmgabel
5 Membran
6 Antriebs-/Empfangseinheit
7 Regel-/Auswerteeinheit
8 Datenleitung
9 Datenleitung
10 Gewinde
11 Deckel
12 Gehäuse
13 Temperatursensor
14 Drucksensor
15 Datenleitung
16 Datenleitung
17 Filter
18 Phasenschieber
19 Verstärker

**Patentansprüche**

1. Verfahren zur Feststellung und/oder Überwachung des Füllstandes eines Mediums in einem Behälter bzw. Verfahren zur Ermittlung der Dichte eines Mediums In dem Behälter,
   wobei eine schwingfähige Einheit auf der Höhe des vorbestimmten Füllstandes angebracht wird bzw. wobei eine schwingfähige Einheit so angebracht wird, daß sie bis zu einer definierten Eintauchtiefe in das Medium eintaucht, wobei die schwingfähige Einheit mittels einer Erregerschwingung zu Schwingungen angeregt wird und wobei das Erreichen des vorbestimmten Füllstandes erkannt wird, sobald die schwingfähige Einheit mit einer Schwingfrequenz schwingt, die eine vorbestimmte Frequenzänderung gegenüber der Erregerfrequenz aufweist, bzw. wobei die Dichte des Mediums anhand der Schwingfrequenz der schwingfähigen Einheit ermittelt wird,
   **dadurch gekennzeichnet,**
   **daß** der Einfluß der Viskosität auf die Schwingfrequenz ($f_s$) der schwingfähigen Einheit (4) bei der Bestimmung des Füllstandes (F) des Mediums (2) in dem Behälter (3) bzw. bei der Bestimmung der Dichte (p) des in dem Behälter (3) befindlichen Mediums (2) ermittelt und entsprechend kompensiert wird.

2. Verfahren nach Anspruch 1,
   **dadurch gekennzeichnet,**
   **daß** eine Frequenzänderung ($\Delta f$) der schwingfähigen Einheit (4), die durch eine Änderung der Viskosität ($\Delta V$) des Mediums (2) hervorgerufen wird, **dadurch** kompensiert wird, daß die Erregerfrequenz ($f_E$) gegenüber der Schwingfrequenz ($f_s$) der schwingfähigen Einheit (4) eine Phasenverschiebung ($\Delta \varphi$) aufweist, die von 90° verschieden ist.

3. Verfahren nach Anspruch 2,
   **dadurch gekennzeichnet,**
   **daß** die Phasenverschiebung ($\Delta \varphi$) zwischen der Erregerfrequenz ($f_E$) und der Schwingfrequenz ($f_s$) der schwingfähigen Einheit (4) so bemessen ist, daß eine auftretende Frequenzänderung ($\Delta f$) im wesentlichen unabhängig ist von der Viskosität (V) des Mediums (2) und somit im wesentlichen nur abhängig ist von der Eintauchtiefe (E) der schwingfähigen Einheit (4) in das Medium (2) bzw. von der Dichte (p) des Mediums (2).

4. Verfahren nach Anspruch 1, 2 oder 3,
   **dadurch gekennzeichnet,**
   **daß** der Einfluß von zumindest einer weiteren Störgröße auf die Schwingfrequenz ($f_s$) ermittelt und entsprechend kompensiert wird, wenn die Störgröße in einem Bereich liegt, daß sie Frequenzänderungen verursacht, die zu Meßfehlern und Fehlfunktionen des Sensors führen.

**5.** Verfahren nach Anspruch 4,
**dadurch gekennzeichnet,**
**daß** die zumindest eine Störgröße direkt gemessen oder indirekt ermittelt wird.

**6.** Verfahren nach Anspruch 1 oder 5.
**dadurch gekennzeichnet,**
**daß** Kennlinien ($\Delta$f(p, T), ($\Delta$f( V)) erstellt und gespeichert werden, die die Frequenzänderung ($\Delta$f) des schwingungsfähigen Gebildes (4) in Abhängigkeit von zumindest einer Störgröße wiedergeben.

**7.** Verfahren nach Anspruch 6,
**dadurch gekennzeichnet,**
**daß** die Kennlinien ($\Delta$f(p, T), ($\Delta$f( V)) anhand eines mathematischen Modells oder anhand empirisch ermittelter Daten erstellt werden.

**8.** Verfahren nach Anspruch 1, 4, 6 oder 7,
**dadurch gekennzeichnet,**
**daß** weitere Parameter bei der Auswahl der Kennlinien berücksichtigt werden, insbesondere die Geometrie und/ oder die Dimensionierung der schwingfähigen Einheit (4), das Material, aus dem die schwingfähige Einheit (4) gefertigt ist und/oder im Falle der Füllstandsbestimmung die Einbauposition der schwingfähigen Einheit (4) im Behälter (3).

**9.** Verfahren nach einem oder mehreren der vorhergehenden Ansprüche,
**dadurch gekennzeichnet,**
**daß** die zumindest eine Störgröße gemessen oder ermittelt wird und
**daß** die entsprechende Frequenzänderung ($\Delta$f) im Falle der Füllstandsmessung bei der Festlegung des Schaltpunktes bzw. im Falle der Dichtemessung bei der Bestimmung der Dichte (p) des Mediums (2) berücksichtigt wird.

**10.** Vorrichtung zur Feststellung und/oder Überwachung des Füllstandes eines Mediums in einem Behälter bzw. Vorrichtung zur Ermittlung der Dichte eines Mediums in dem Behälter,
wobei eine schwingfähige Einheit vorgesehen ist, die auf der Höhe des vorbestimmten Füllstandes angebracht ist bzw. wobei eine schwingfähige Einheit so angebracht ist, daß es bis zu einer definierten Eintauchtiefe in das Medium eintaucht,
wobei eine Antriebs-/Empfangseinheit vorgesehen ist, die die schwingfähige Einheit mit einer vorgegebenen Erregerfrequenz zu Schwingungen anregt und die die Schwingungen der schwingfähigen Einheit empfängt, und wobei eine Regel-/Auswerteeinheit vorgesehen ist, die das Erreichen des vorbestimmten Füllstandes erkennt, sobald eine vorgegebene Frequenzänderung auftritt bzw. die anhand der Schwingfrequenz der schwingfähigen Einheit die Dichte des Mediums ermittelt,
**dadurch gekennzeichnet,**
**daß** die Regel-/Auswerteeinheit (7) den Einfluß der Viskosität auf die Schwingfrequenz ($f_s$) der schwingfähigen Einheit (4) ermittelt und
**daß** die Regel-/Auswerteeinheit (7) die Frequenzänderung, bei der das Erreichen des vorbestimmten Füllstandes (F) angezeigt wird, derart korrigiert,
**daß** der Einfluß dieser Störgröße eliminiert wird, bzw.
**daß** die Regel-/Auswerteeinheit (7) den durch die Störgröße auftretenden Meßfehler bei der Bestimmung der Dichte (p) berücksichtigt.

**11.** Vorrichtung nach Anspruch 10,
**dadurch gekennzeichnet,**
**daß** die Regel-/Auswerteeinheit (7) den Einfluß mindestens einer weiteren Störgröße auf die Schwingfrequenz ($f_s$) der schwingfähigen Einheit (4) ermittelt und entsprechend kompensiert, wenn die Störgröße in einem Bereich liegt, daß sie Frequenzänderungen verursacht, die zu Meßfehlern und Fehlfunktionen des Sensors führen.

**12.** Vorrichtung nach Anspruch 11,
**dadurch gekennzeichnet,**
**daß** es sich bei der zumindest einen Störgröße um die Temperatur (T) oder den Druck (p) des Mediums (2) handelt.

**13.** Vorrichtung nach Anspruch 11 oder 12,
**dadurch gekennzeichnet,**

7

**daß** ein Temperatursensor (12) und/oder ein Drucksensor (13) vorgesehen sind/ist, die/der die Temperatur (T) bzw. den Druck (p) in der Umgebung der schwingfähigen Einheit (4) bestimmen/bestimmt.

14. Vorrichtung nach Anspruch 11 oder 12,
**dadurch gekennzeichnet,**
**daß** der Temperatursensor (12) und/oder der Drucksensor (13) in die Vorrichtung (1) zur Bestimmung des Füllstandes (F) bzw. der Dichte (p) integriert sind.

15. Vorrichtung nach Anspruch 13 oder 14,
**dadurch gekennzeichnet,**
**daß** die eine Datenübertragungsstrecke bzw. ein Datenbus ((8, 9), vorgesehen ist, über die der Sensor und/oder die einzelnen Einheiten (12,13) der erfindungsgemäßen Vorrichtung (1) ihre Daten an die Regel-/Auswerteeinheit (7) weiterleiten bzw. über den der Sensor und/oder die einzelnen Einheiten (12, 13) der erfindungsgemäßen Vorrichtung (1) mit der Regel-/Auswerte-einheit-kommunizieren.

## Claims

1. A method for determining and/or monitoring the fill level of a medium in a container or a method for ascertaining the density of a medium in the container,
wherein an oscillatory unit is mounted at the level of the predetermined fill level or
wherein an oscillatory unit is mounted such that it is immersed into the medium to a defined immersion depth,
wherein the oscillatory unit is excited into oscillations by means of an excitation oscillation and
wherein the reaching of the predetermined fill level is detected as soon as the oscillatory unit oscillates with an oscillation frequency which has a predetermined frequency change relative to the excitation frequency, or wherein the density of the medium is ascertained with the aid of the oscillation frequency of the oscillatory unit,
**characterised**
**in that** the influence of the viscosity on the oscillation frequency ($f_s$) of the oscillatory unit (4) is ascertained when determining the fill level (F) of the medium (2) in the container (3) or when determining the density (p) of the medium (2) located in the container (3) and is correspondingly compensated.

2. A method according to Claim 1,
**characterised**
**in that** a frequency change ($\Delta f$) of the oscillatory unit (4), which is produced by a change of the viscosity ($\Delta V$) of the medium (2), is compensated by the excitation frequency ($f_E$) having a phase shift ($\Delta \varphi$) which is other than 90° relative to the oscillation frequency ($f_s$) of the oscillatory unit (4).

3. A method according to Claim 2,
**characterised**
**in that** the phase shift ($\Delta \varphi$) between the excitation frequency ($f_E$) and the oscillation frequency ($f_s$) of the oscillatory unit (4) is sized such that an occurring frequency change ($\Delta f$) is substantially independent of the viscosity (V) of the medium (2) and thus is substantially only dependent on the immersion depth (E) of the oscillatory unit (4) into the medium (2) or on the density (p) of the medium (2).

4. A method according to Claim 1, 2 or 3,
**characterised**
**in that** the influence of at least one further disturbance variable on the oscillation frequency ($f_s$) is ascertained and correspondingly compensated if the disturbance variable lies within a range so that it causes frequency changes which lead to measurement errors and malfunctions of the sensor.

5. A method according to Claim 4,
**characterised**
**in that** the at least one disturbance variable is measured directly or ascertained indirectly.

6. A method according to Claim 1 or 5,
**characterised**
**in that** characteristic curves ($\Delta f(p, T)$), ($\Delta f(V)$) are plotted and stored, which reproduce the frequency change ($\Delta f$) of the oscillatory structure (4) in dependence on at least one disturbance variable.

**7.** A method according to Claim 6,
**characterised**
**in that** the characteristic curves ($\Delta$f(p, T), ($\Delta$f(V)) are plotted with the aid of a mathematical model or with the aid of empirically ascertained data.

**8.** A method according to Claim 1, 4, 6 or 7,
**characterised**
**in that** further parameters are taken into account when selecting the characteristic curves, particularly the geometry and/or the dimensioning of the oscillatory unit (4), the material from which the oscillatory unit (4) is made and/or, in the case of fill level determination, the installation position of the oscillatory unit (4) in the container (3).

**9.** A method according to one or more of the preceding Claims,
**characterised**
**in that** the at least one disturbance variable is measured or ascertained and in that the corresponding frequency change ($\Delta$f), in the case of fill level measurement, is taken into account when determining the switching point or, in the case of density measurement, when determining the density (p) of the medium (2).

**10.** A device for determining and/or monitoring the fill level of a medium in a container or a device for ascertaining the density of a medium in the container,
wherein an oscillatory unit is provided which is mounted at the level of the predetermined fill level or wherein an oscillatory unit is mounted such that it is immersed into the medium to a defined immersion depth,
wherein a driving/receiving unit is provided which excites the oscillatory unit into oscillations with a predetermined excitation frequency and which receives the oscillations of the oscillatory unit, and wherein a regulating/evaluating unit is provided which detects the reaching of the predetermined fill level as soon as a predetermined frequency change occurs or which ascertains the density of the medium with the aid of the oscillation frequency of the oscillatory unit,
**characterised**
**in that** the regulating/evaluating unit (7) ascertains the influence of the viscosity on the oscillation frequency $(f_s)$ of the oscillatory unit (4) and
**in that** the regulating/evaluating unit (7) corrects the frequency change, at which the reaching of the predetermined fill level (F) is indicated, in such a way that the influence of this disturbance variable is eliminated, or
**in that** the regulating/evaluating unit (7) takes into account the measurement error occurring as a result of the disturbance variable when determining the density (p).

**11.** A device according to Claim 10,
**characterised**
**in that** the regulating/evaluating unit (7) ascertains the influence of at least one further disturbance variable on the oscillation frequency $(f_s)$ of the oscillatory unit (4) and compensates correspondingly if the disturbance variable lies within a range so that it causes frequency changes which lead to measurement errors and malfunctions of the sensor.

**12.** A device according to Claim 11,
**characterised**
**in that** the at least one disturbance variable is the temperature (T) or the pressure (p) of the medium (2).

**13.** A device according to Claim 11 or 12,
**characterised**
**in that** a temperature sensor (12) and/or a pressure sensor (13) is/are provided, which determines/determine the temperature (T) or the pressure (p) in the vicinity of the oscillatory unit (4).

**14.** A device according to Claim 11 or 12,
**characterised**
**in that** the temperature sensor (12) and/or the pressure sensor (13) are integrated into the device (1) for determining the fill level (F) or the density (p).

**15.** A device according to Claim 13 or 14,
**characterised**
**in that** a data transfer path or a data bus (8, 9) is provided, via which the sensor and/or the individual units (12, 13) of the device (1) according to the invention forward their data to the regulating/evaluating unit (7) or via which the sensor and/or the individual units (12, 13) of the device (1) according to the invention communicate with the regulating/ evaluating unit.

## Revendications

1. Procédé destiné à la détermination et/ou la surveillance du niveau d'un produit au sein d'un réservoir, ou procédé destiné à la détermination de la densité d'un produit au sein d'un réservoir,
une unité apte à vibrer étant installée à la hauteur du niveau prédéfini, ou une unité apte à vibrer étant installée de telle manière qu'elle immerge dans le produit jusqu'à une profondeur d'immersion définie,
l'unité apte à vibrer étant excitée en vibrations au moyen d'une vibration d'excitation et l'atteinte du niveau prédéfini étant détectée sitôt que l'unité apte à vibrer vibre à une fréquence de vibration, qui présente un changement de fréquence prédéfini par rapport à la fréquence d'excitation, ou la densité du produit étant déterminée sur la base de la fréquence de vibration de l'unité apte à vibrer,
**caractérisé en ce**
**que** l'influence de la viscosité sur la fréquence de vibration ($f_s$) de l'unité apte à vibrer (4) est déterminée et compensée en conséquence lors de la détermination du niveau (F) du produit (2) dans le réservoir (3), ou lors de la détermination de la densité (p) du produit (2) se trouvant dans le réservoir (3).

2. Procédé selon la revendication 1,
**caractérisé en ce**
**qu'**un changement de fréquence ($\Delta f$) de l'unité apte à vibrer (4), qui est occasionné par un changement de viscosité ($\Delta V$) du produit (2), est compensé par le fait que la fréquence d'excitation ($f_E$) présente un déphasage ($\Delta \varphi$) de 90° par rapport à la fréquence de vibration ($f_s$) de l'unité apte à vibrer (4).

3. Procédé selon la revendication 2,
**caractérisé en ce**
**que** le déphasage ($\Delta \varphi$) entre la fréquence d'excitation ($f_E$) et la fréquence de vibration ($f_s$) de l'unité apte à vibrer (4) est dimensionné de telle sorte que le changement de fréquence ($\Delta f$) survenant est pour l'essentiel indépendant de la viscosité (V) du produit (2), et ainsi pour l'essentiel seulement dépendant de la profondeur d'immersion (E) de l'unité apte à vibrer (4) dans le produit (2), ou de la densité (p) du produit (2).

4. Procédé selon la revendication 1, 2 ou 3,
**caractérisé en ce**
**que** l'influence d'au moins une autre grandeur perturbatrice sur la fréquence de vibration ($f_s$) est déterminée et compensée en conséquence, lorsque la grandeur perturbatrice se situe dans une zone, dans laquelle elle occasionne des changements de fréquence, qui conduisent à des erreurs de mesures ou des dysfonctionnements du capteur.

5. Procédé selon la revendication 4,
**caractérisé en ce**
**qu'**au moins la grandeur perturbatrice est mesurée directement ou déterminée indirectement.

6. Procédé selon la revendication 1 ou 5,
**caractérisé en ce**
**que** sont créées et enregistrées les courbes caractéristiques ($\Delta f(p, T)$, ($\Delta f(V)$), qui reflètent le changement de fréquence ($\Delta f$) de l'unité apte à vibrer (4) en fonction d'au moins une grandeur perturbatrice.

7. Procédé selon la revendication 6,
**caractérisé en ce**
**que** les courbes caractéristiques ($\Delta f(p, T)$, ($\Delta f(V)$) sont créées au moyen d'un modèle mathématique ou de données déterminées de façon empirique.

8. Procédé selon la revendication 1, 4, 6 ou 7,
**caractérisé en ce**
**qu'**il est tenu compte de paramètres supplémentaires lors du choix des courbes caractéristiques, notamment de la géométrie et/ou du dimensionnement de l'unité apte à vibrer (4), de la matière dans laquelle l'unité apte à vibrer (4) est fabriquée et/ou, dans le cas de la mesure de niveau, de la position de montage de l'unité apte à vibrer (4) au sein du réservoir (3).

**9.** Procédé selon une ou plusieurs des revendications précédentes,
**caractérisé en ce**
**qu'**au moins une grandeur perturbatrice est mesurée ou déterminée, et en ce que le changement de fréquence (Δf) correspondant est pris en compte, dans le cas de la mesure de niveau, lors de la détermination du point de commutation ou, dans le cas de la mesure de densité, lors de la détermination de la densité (p) du produit (2).

**10.** Dispositif destiné à la détermination et/ou la surveillance du niveau d'un produit au sein d'un réservoir, ou dispositif destiné à la détermination de la densité d'un produit au sein d'un réservoir,
une unité apte à vibrer étant prévue à la hauteur du niveau prédéfini, ou une unité apte à vibrer étant installée de telle manière qu'elle immerge dans le produit jusqu'à une profondeur d'immersion définie,
une unité d'entraînement / de réception étant prévue, laquelle excite en vibrations l'unité apte à vibrer selon une fréquence d'excitation prédéfinie et reçoit les vibrations de l'unité apte à vibrer, et une unité de régulation / d'exploitation étant prévue, laquelle détecte l'atteinte du niveau prédéfini sitôt que survient un changement de fréquence prédéfini, ou laquelle détermine la densité du produit au moyen de la fréquence de vibration de l'unité apte à vibrer,
**caractérisé en ce**
**que** l'unité de régulation / d'exploitation (7) détermine l'influence de la viscosité sur la fréquence de vibration ($f_s$) de l'unité apte à vibrer (4), et en ce que l'unité de régulation / d'exploitation (7) corrige le changement de fréquence affiché, auquel l'atteinte du niveau (F) prédéfini est affichée, de telle manière à éliminer l'influence de cette grandeur perturbatrice, ou en ce que l'unité de régulation / d'exploitation (7) prend en compte l'erreur de mesure survenant en raison de la grandeur perturbatrice lors de la détermination de la densité (p).

**11.** Dispositif selon la revendication 10,
**caractérisé en ce**
**que** l'unité de régulation / d'exploitation (7) détermine et compense en conséquence l'influence d'au moins une grandeur perturbatrice supplémentaire sur la fréquence de vibration ($f_s$) de l'unité apte à vibrer (4), lorsque la grandeur perturbatrice se situe dans une zone, dans laquelle elle occasionne des changements de fréquence, qui conduisent à des erreurs de mesure et des dysfonctionnements du capteur.

**12.** Dispositif selon la revendication 11,
**caractérisé en ce**
**que** concernant la grandeur perturbatrice, il s'agit de la température (T) ou de la pression (p) du produit (2).

**13.** Dispositif selon la revendication 11 ou 12,
**caractérisé en ce**
**qu'**est/sont prévu(s) un capteur de température (12) et/ou un capteur de pression (13), qui détermine(nt) la température (T) ou la pression (p) régnant dans l'environnement de l'unité apte à vibrer (4).

**14.** Dispositif selon la revendication 11 ou 12,
**caractérisé en ce**
**que** le capteur de température (12) et/ou le capteur de pression (13) sont intégrés dans le dispositif (1) destiné à la détermination du niveau (F) ou de la densité (p).

**15.** Dispositif selon la revendication 13 ou 14,
**caractérisé en ce**
**qu'**est prévu(e) une ligne de transmission de données ou un bus de donnée (8, 9), par l'intermédiaire de laquelle / duquel le capteur et/ou les différentes unités (12, 13) du dispositif (1) conforme à l'invention transmettent leurs données à l'unité de régulation / d'exploitation (7), ou par l'intermédiaire de laquelle / duquel le capteur et/ou les différentes unités (12, 13) du dispositif (1) conforme à l'invention communiquent avec l'unité de régulation / d'exploitation (7).

## Fig.1

**Fig.2**

Vorgabe $\triangle f$ (Soll)

```
        ┌──────────────┐
        │    Start     │──── 20
        └──────┬───────┘
               │
        ┌──────▼───────┐
        │   Messe T    │──── 21 ◄──────────┐
        └──────┬───────┘                   │
               │                           │
        ┌──────▼───────┐                   │
        │   Messe p    │──── 22            │
        └──────┬───────┘                   │
               │                           │
        ┌──────▼───────┐                   │
        │   Berechne   │                   │
        │  △f (p,T)    │──── 23            │
        └──────┬───────┘                   │
               │                           │
        ┌──────▼───────┐                   │
        │  Korrigiere  │                   │
        │   △f (IST)   │──── 24            │
        │  mit△f (p,T) │                   │
        └──────┬───────┘                   │
               │                           │
               ▼         25                │
           ◇─────────◇                     │
          ╱ △f (IST)Korr ╲   nein          │
         ◇  =△f (SOLL)   ◇───────────────┘
          ╲             ╱
           ◇─────────◇
               │ ja
               ▼         26            27
        ┌──────────────────┐      ┌──────────┐
        │ Melde Sensor      │─────▶│   Ende   │
        │    "Bedeckt"      │      └──────────┘
        └──────────────────┘
```

Vorgabe $\rho\,(\Delta f)$

**Fig.3**

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6044694 A